# EUROPEAN PATENT APPLICATION

(11) **EP 2 563 056 A2**
(43) Date of publication of application: **27.02.2013**
(21) Application number: 12169018.4
(22) Date of filing: 23.05.2012
(51) Int. Cl.: H04W 12/08, H04L 12/22, H04L 29/08

(54) **Apparatus and method for controlling permissions in mobile terminal**

(30) Priority: 24.08.2011 KR 20110084791
(71) Applicant: Pantech Co., Ltd., Seoul 121-792 (KR)
(72) Inventor: Yang, Sun-Joo, 121-792 Seoul (KR); Kang, Shin-Rok, 121-270 Seoul (KR); No, Dek-Hwan, 121-792 Seoul (KR)
(74) Representative: Jordan, Volker Otto Wilhelm

(57) **Abstract**

A mobile terminal and a method for preventing leakage of information and unauthorized use of resources is provided. The mobile terminal includes a monitoring unit to receive an application execution request and to generate an authority request for the application, a setting unit to determine whether the application execution request corresponds to a set permission limitation, and a processor to apply the permission limitation to the application according to the set permission limitation. The method includes receiving a request to execute an operation of the application, generating an authorization request for the application, determining whether the application corresponds to a set permission limitation stored in a data storage, and applying a permission limitation to the application according to the set permission limitation.

## Description

### CROSS-REFERENCE TO RELATED APPLICATIONS

This application claims the benefit under 35 U.S.C. §119(a) of a Korean Patent Application No. 10-2011-0084791, filed on August 24, 2011, the entire disclosure of which is incorporated herein by reference for all purposes. This application is related to U.S. Patent Application No. 13/351,119, filed on January 16, 2012, having attorney docket number P4611US00 which claims priority from and the benefit of Korean Patent Application No. 10-2011-0084790, filed on August 24, 2011, and to U.S. Patent Application No. 13/351,126, filed on January 16, 2012, having attorney docket number P4612US00 which claims priority from and the benefit of Korean Patent Application No. 10-2011-0084789, filed on August 24, 2011, all of which are assigned to the same assignee as the current application, and all of which are incorporated by reference in its entirety as if fully set forth herein.

### BACKGROUND

FIELD

The following description relates to a mobile terminal, and more particularly, to a mobile terminal and a method for securing applications and services that are performed by the mobile terminal.

DISCUSSION OF THE BACKGROUND

While smart phone may provide its users with convenience, smart phones may expose personal information or location information of the smart phone's user, as well as be exposed to malicious viruses and/or applications. Accordingly, there are methods being developed for securing unique information of smart phones or personal information of a smart phone's user against such information leakage. Recently, security related to location information has been recognized as a social issue. Accordingly, enhancement of security by monitoring its activities and limiting the operations of a smart phone may be desired by its users.

According to a conventional technique, if one or more applications are installed in the smart phone, information about use of the corresponding operations of the applications may be stored so that information about what operations will be used can be provided.

If an application is executed to request execution of a reference operation, authority for the operation may be verified, and the operation may be executed after the operation of the application completes authentication on its authority.

However, once authenticated, the conventional technique may not provide a user with any notification upon another request for execution of another operation of the application, so that unauthorized applications can tap into previously granted authority without additional authentication. Accordingly, the operations of applications may operate unconditionally based on authorities authenticated in advance even though a user may not authenticate the subsequent access. Thus, mobile terminals may be vulnerable to its security.

Also, mobile terminals may be in a sleep mode for many hours, and in the sleep mode, the operations of one or more applications may operate without a user's recognition. Furthermore, even if mobile phones are in a locked state, operations of one or more application may execute. If a user locks his or her mobile phone, the user may not use some of operations of the mobile phone. Accordingly, in the locked state, one or more operations may be stopped or at least the authenticated operations may be terminated. For these reasons, the conventional technique may not be suitable for mobile terminals.

### SUMMARY

Exemplary embodiments of the present invention provide an apparatus and a method for preventing leakage of information and unauthorized use of resources.

Additional features of the invention will be set forth in the description which follows, and in part will be apparent from the description, or may be learned by practice of the invention.

Exemplary embodiments of the present invention provide a method for limiting permission of an application in a mobile terminal including receiving a request to execute an operation of the application, generating an authorization request for the application, determining whether the application corresponds to a set permission limitation stored in a data storage, and applying a permission limitation to the application according to the set permission limitation.

Exemplary embodiments of the present invention provide a mobile terminal to limit permission of an application in a mobile terminal including a monitoring unit to receive an application execution request and to generate an authority request for the application, a setting unit to determine whether the application execution request corresponds to a set permission limitation, and a processor to apply the permission limitation to the application according to the set permission limitation.

Exemplary embodiments of the present invention provide a receiving a request to execute an operation of the application, generating an authorization request for the application, determining whether the application corresponds to a set permission limitation, applying a permission limitation to the application according to the set permission limitation, determining a security state level set for the application, controlling a level of notification provided according to the security state level, and delivering a notification of a result of applying the permission limitation based on the determined security state level set.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a mobile terminal according to an exemplary embodiment of the invention.

FIG. 2 is a diagram illustrating a permission limitation setting menu according to an exemplary embodiment of the invention.

FIG. 3 is a flowchart illustrating a permission limitation setting method according to an exemplary embodiment of the invention.

FIG. 4 is a diagram illustrating a permission limitation results output setting screen according to an exemplary embodiment of the invention.

FIG. 5A and FIG. 5B are diagrams illustrating an operation in response to a selection of automatic permission limitation on a permission setting menu according to an exemplary embodiment of the invention.

FIG. 6A, FIG. 6B, and FIG. 6C are diagrams illustrating an operation in response to a selection of application-based permission limitation on a permission setting menu according to an exemplary embodiment of the invention.

FIG. 7 is a flowchart illustrating an operation in response to a selection of group-based permission limitation on a permission setting menu according to an exemplary embodiment of the invention.

FIG. 8 is a flowchart illustrating an operation of a monitoring unit according to an exemplary embodiment of the invention.

FIG. 9 is a flowchart illustrating an operation of a processor module A that processes an automatic permission limitation setting according to an exemplary embodiment of the invention.

FIG. 10 is a flowchart illustrating an operation of a processor module B that processes a permission limitation setting according to a selection of a trusted application according to an exemplary embodiment of the invention.

FIG. 11 is a screen shot of an operation of a processor module C that processes an application-based permission limitation setting according to an exemplary embodiment of the invention.

FIG. 12 is a screen shot of an operation of a processor module D that processes a group-based permission limitation setting according to an exemplary embodiment of the invention.

FIG. 13 is a flowchart illustrating an operation of a reporting unit according to an exemplary embodiment of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

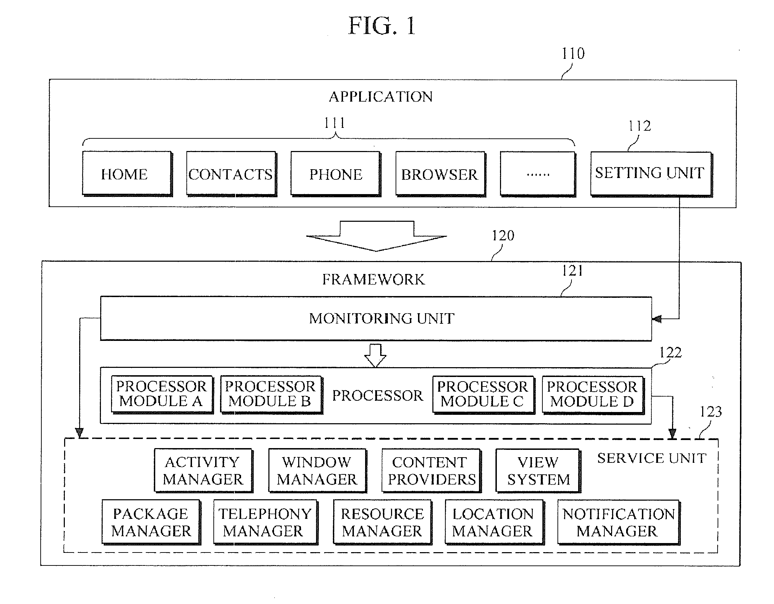

FIG. 1 is a diagram illustrating a mobile terminal according to an exemplary embodiment of the invention.

Referring to FIG. 1, the mobile terminal includes an application part 110 and a framework part 120.

The application part 110 may include one or more applications 111 that may have been initially installed by a manufacturing company, and/or applications 111 that were downloaded by a user through a wired/wireless communication network. The applications 111 may execute their operations through the framework part 120.

The framework part 120 may include a service unit 123. The service unit 123 may perform a service in response to a command execution request received from the application part 110, and may include a one or more manager services. Details related to the service unit 123 are well known, and a description thereof will be omitted.

The mobile terminal may further include one or more components to control permissions of the applications 111. Referring to FIG. 1, the components to control permissions of the applications 111 may include a setting unit 112, a monitoring unit 121, and a processor 122.

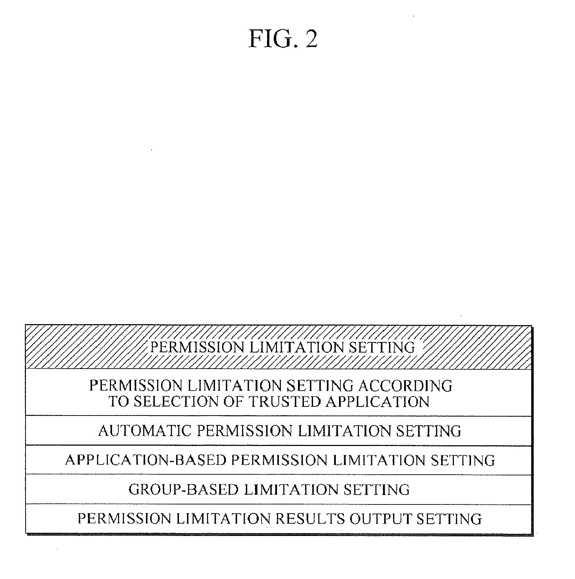

The setting unit 112 may be an application, which may provide a user interface to receive permission control information about the applications 111 from a user. The setting unit 112 will be described in more detail with reference to FIG. 2, FIG. 3, FIG. 4, FIG. 5, FIG. 6, and FIG. 7, later.

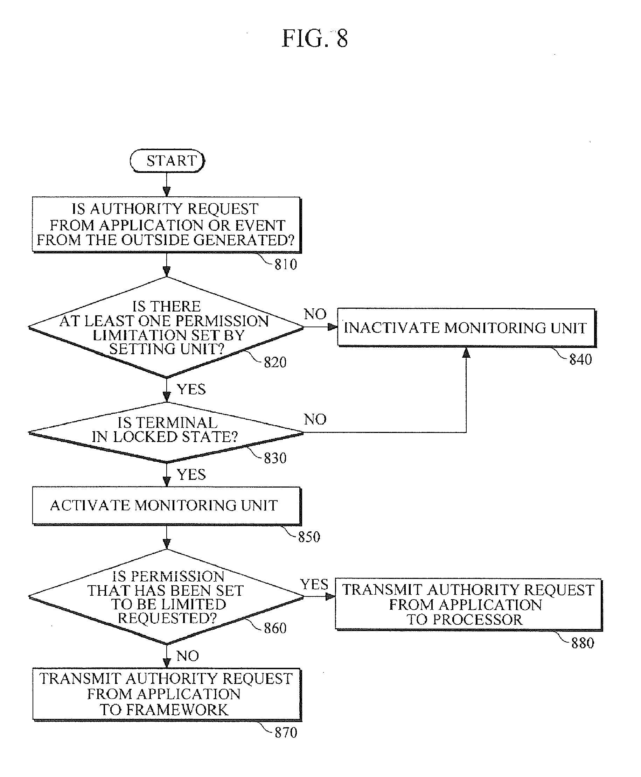

Referring back to FIG. 1, the monitoring unit 121 is located in the framework 120. The monitoring unit 121 may store permission limitation or control information set by the setting unit 112, monitor whether an application execution request is issued, and send an authority request or an application execution request to the processor 122. Details related to the monitoring unit 121 will be described with reference to FIG. 8, later.

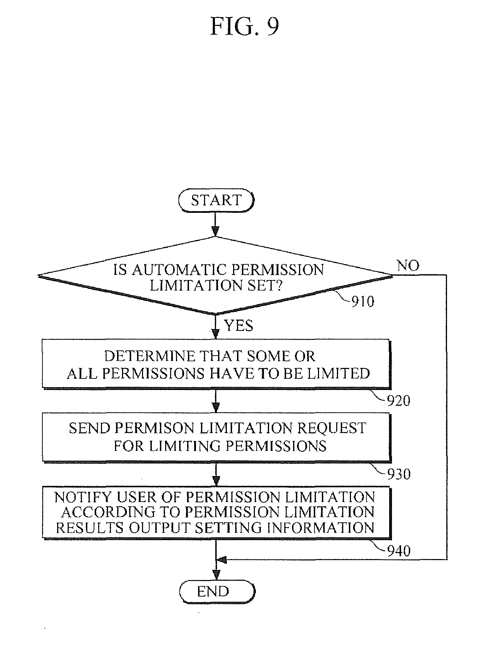

The processor 122 may be used to control applications that may request authority limitations and/or permission limitations. The applications to be controlled by the processor 122 may be determined by the monitoring unit 121. The processor 122 may include one or more modules that may correspond to menu items according to initial settings by the setting unit 112. Details related to operation of the modules will be described with reference to FIG. 9, FIG. 10, FIG. 11, FIG. 12, and FIG. 13, later.

The operation of the setting unit 112 will be described in detail with reference to FIG. 2, FIG. 3, FIG. 4, FIG. 5, FIG. 6, and FIG. 7, below.

The setting unit 112 may be driven in response to a user's request to control a permission of an application and to display a permission limitation setting menu as shown in FIG. 2.

FIG. 2 is a diagram illustrating a permission limitation setting menu according to an exemplary embodiment of the invention.

Referring to FIG. 2, the permission limitation setting menu includes a permission limitation setting item according to a selection of a trusted application or a trusted application permission limitation setting item, an automatic permission limitation setting item, an application-based permission limitation setting item, a group-based permission limitation setting item, and a permission limitation results output setting item. The group-based permission limitation may be set according groupings of two or more permissions to form a permission group-based permission limitation setting item. A permission limitation method may be based on the menu item selected, and the permission limitation setting items included in the permission limitation setting menu may have priorities. Further, some applications may select the permission limitation setting automatically based on one or more reference conditions of the mobile terminal and/or applications.

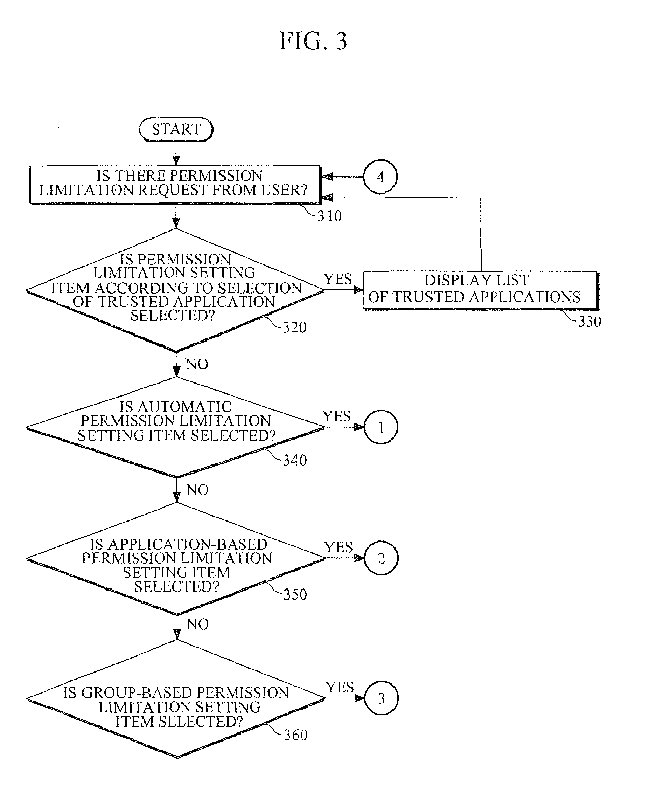

Hereafter, a process in which a permission limitation is set in consideration of various priorities will be described in detail with reference to FIG. 3.

FIG. 3 is a flowchart illustrating a permission limitation setting method according to an exemplary embodiment of the invention.

Referring to FIG. 1, FIG. 2, and FIG. 3, the mobile terminal receives a permission limitation request (310). In response, the setting unit 112 determines whether the permission limitation setting item according to a selection of a trusted application is selected (320). If it is determined in operation 320 that the permission limitation setting item is selected according to the selection of the trusted application, the setting unit 112 displays a list of trusted applications in the form of a notification window (e.g., a pop-up window, a pop-under window, and the like) and then displays the permission limitation setting menu (330).

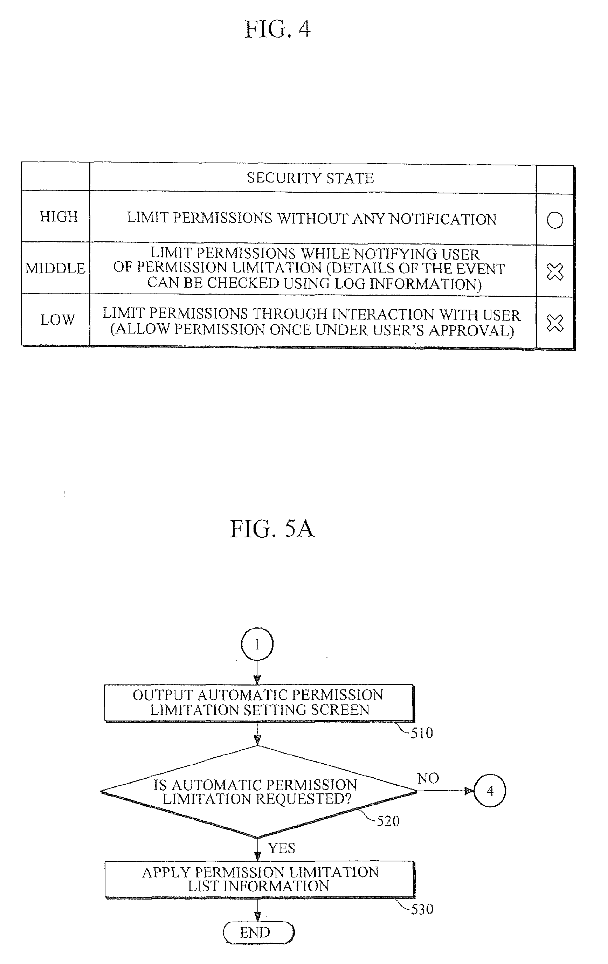

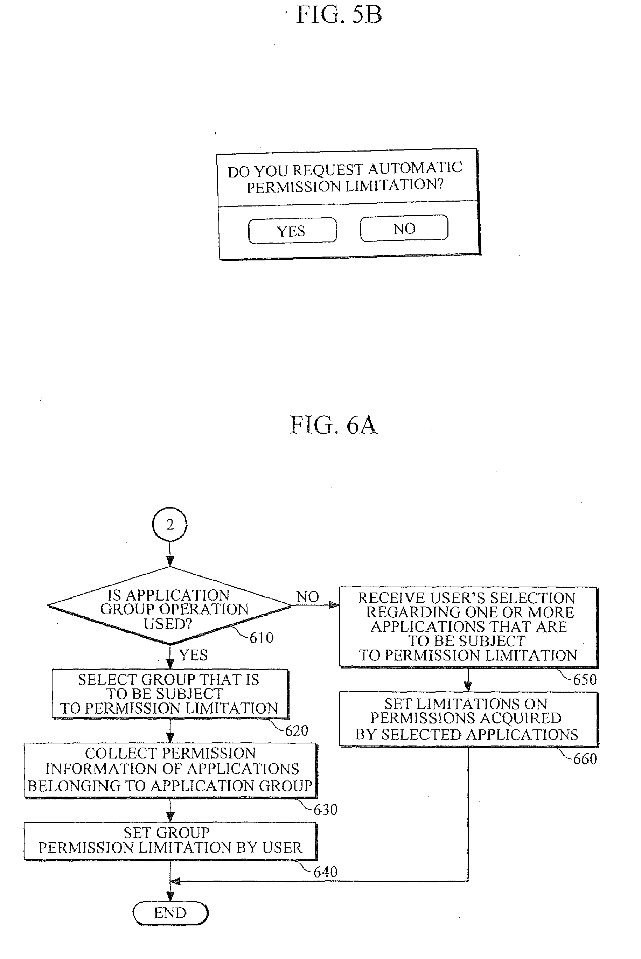

An item having second priority may be an automatic permission limitation setting item. The automatic permission limitation setting item may be used to limit permission groups included in a reference limitation authority list. The setting unit 112 determines whether the automatic permission limitation setting item is selected (340). Operation after the automatic permission limitation setting item is selected will be described with reference to FIG. 5A and FIG. 5B, later.

The permission limitation setting menu may include the application-based permission limitation setting item and the permission group-based permission limitation setting item as described above. In an example, the application-based permission limitation setting may be processed with a higher priority than the permission group-based permission limitation setting. However, the permission of each application may be processed in overall consideration of both the application-based permission limitation setting and the permission group-based permission limitation setting. Further, although permission limitation settings are illustrated having a particular order of priorities, the ordering of priorities is not limited to the priorities described above and are provided in the order illustrated for ease of understanding.

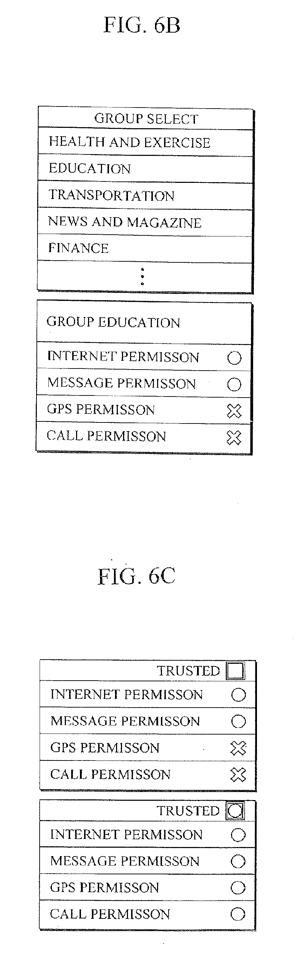

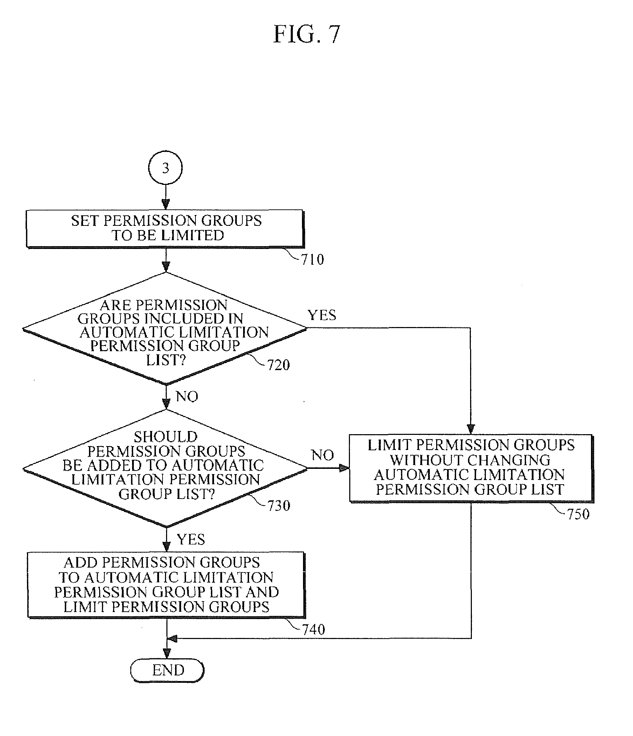

Operation in response to the application-based permission limitation setting item selection in operation 350 will be described with reference to FIG. 6A, FIG. 6B, and FIG. 6C, later. Also, operation in response to the selection of permission group-based permission limitation setting item in operation 360 will be described with reference to FIG. 7, later.

Further, the permission limitation setting menu may include permission limitation results output setting item as described above. If the permission limitation results output setting item is selected, the setting unit 112 may display a screen capable of selecting a security state, as shown in FIG. 4, for the user.

FIG. 4 is a diagram illustrating a permission limitation results output setting screen according to an exemplary embodiment of the invention.

Referring to FIG. 1 and FIG. 4, the permission limitation results output setting screen may control a security state with three levels: "high", "middle", and "low". If a user selects a "high" security state level, the setting unit 112 may request the processor 122 to limit permission without providing notification to the user, a system, or a mobile terminal. If the user selects a "middle" security state level, the setting unit 112 may request the processor 122 to limit permission while notifying the user, a system, or a mobile terminal of the permission limitation. If the user selects a "low" security state level, the setting unit 112 may request the processor 122 to notify a permission limitation to the user, a system, or the mobile terminal and limit permissions according to the set permission limitation. A method for notifying a permission limitation to a user, a system, or a mobile terminal may be based on visual message, transmitted algorithm or command, sound, vibrations, a silent alarm, and the like.

Hereinafter, operation when the automatic permission limitation setting item is selected will be described with reference to FIG. 5A and FIG. 5B.

FIG. 5A and FIG. 5B are diagrams illustrating an operation in response to a selection of automatic permission limitation on a permission setting menu according to an exemplary embodiment of the invention.

Referring to FIG. 1 and FIG. 5A, the setting unit 112 outputs an automatic permission limitation setting screen (510). An example of the automatic permission limitation setting screen is illustrated in FIG. 5B. The setting unit 112 determines whether an automatic permission limitation is requested (520). That is, the setting unit 112 may determine whether a "YES" icon on the automatic permission limitation setting screen is selected.

If the automatic permission limitation setting is requested, the setting unit 112 applies permission limitation list information that has been set (530). More specifically, the permission list information may be based on a user input limitation, a status of a mobile terminal, a status of an application, application type, information accessed by the application, and the like. For example, since a mobile terminal may disallow dialing operation if the mobile terminal is locked, the setting unit 112 may create a dialing permission as one of permission list information. As such, the setting unit 112 may set a permission related to an operation that may be inactivated if the mobile terminal is locked.

That is, by using a selection menu similar to the automatic permission limitation setting screen as illustrated in FIG. 5B, selection operation may be performed to execute a permission limitation without performing additional setting process.

Hereinafter, operation if the application-based permission limitation setting item is selected will be described with reference to FIG. 6A, FIG. 6B, and FIG. 6C.

FIG. 6A, FIG. 6B, and FIG. 6C are diagrams illustrating an operation in response to a selection of application-based permission limitation on a permission setting menu according to an exemplary embodiment of the invention.

Referring to FIG. 6A, applications may be classified into several groups according to their characteristics, such as category classification of a market (e.g., health and exercise, education, transportation, news and magazine, finance, and the like). A user may set permission limitations for the individual applications according to the application groups. Further, grouping of applications may be classified into various groups, subgroups, or families of groups based on reference characteristics and may not be limited to the examples illustrated herein.

Referring to FIG. 6A, if a user tries to perform or execute a permission limitation for an application, the setting unit 112 may determine whether an application group operation is used (610). That is, if a user selects the application-based permission limitation setting item, the setting unit 112 may determine whether a group based on the categories of applications has to be selected.

If it is determined in operation 610 that the application group operation is to be used, the setting unit 112 receives the user's selection regarding a group that may be subject to a permission limitation (620).

Referring to FIG. 6B, an application group menu is shown, and an application group is selected from the application group menu.

Referring again to FIG. 1 and FIG. 6A, the setting unit 112 collects, if an application group is selected, permission information of applications belonging to the application group and outputs or displays the collected permission information on a screen (630). Referring to FIG. 6B, the application group selected by the user may include a one or more permission items or settings. More specifically, as illustrated in FIG. 6B, if application group "EDUCATION" is selected from the list of available groups, the group "EDCUATION" may be set to allow internet and message operations, but not GPS or call operation.

The setting unit 112 sets a group permission limitation by allowing the user to select at least one from among the permission items (640). That is, the setting unit 112 may set or apply limitations on permissions acquired by applications belonging to the selected group. Referring to FIG. 6B, if "Internet Permission" and "Message Permission" are selected, the setting unit 112 may limit the "Internet Permission" and "Message Permission".

If it is determined in operation 610 that the application group operation is not to be used, the setting unit 112 receives the user's selection regarding one or more applications that may be subject to a permission limitation. That is, the setting unit 112 receives the user's selection regarding one or more applications that are subject to a permission limitation (650), and sets or applies limitations on permissions acquired by the selected applications (660). FIG. 6C shows an application-based permission limitation setting screen.

As illustrated in FIG. 6C, the application-based permission limitation setting screen displays a list of available permissions and a list of currently limited permissions for an application. In an example, the user may check or release the individual permissions, to allow or limit permissions. An application may be "Trusted", as illustrated in FIG 6C, if the application satisfies a reference condition or if the application is selected by the user to be trusted. The "Trusted" application may be set to apply an eased permission limitation condition.

The setting unit 112 may set a permission limitation according to the user's selection through the application-based permission limitation setting screen as illustrated in FIG. 6B.

An operation in response to a selection of a group-based permission limitation setting menu, more specifically, a permission group-based permission limitation will be described with reference to FIG. 7, below.

FIG. 7 is a flowchart illustrating an operation in response to a selection of group-based permission limitation on a permission setting menu according to an exemplary embodiment of the invention.

Permission groups may be created by grouping a plurality of permissions into groups, which may be understood by a user. A permission limitation may be performed based on the permission groups. The permission groups may be different or similar from the application groups described above. In the case where a permission limitation may be performed on an application, a menu to limit the permission groups may be provided.

Referring to FIG. 1 and FIG. 7, the setting unit 112 may allow a user to set one or more permission groups that he or she wants to limit (710). The monitoring unit 121 determines whether the permission groups are included in an automatic limitation permission group list (720).

If it is determined in operation 720 that the permission groups are not included in the automatic limitation permission group list, the setting unit 112 determines whether the permission groups are to be added to the automatic limitation permission group list (730).

If it is determined in operation 730 that the permission groups are to be added to the automatic limitation permission group list, the setting unit 112 adds the permission groups to the automatic limitation permission group list and limits the permission groups.

If it is determined in operation 730 that the permission groups are not included in the automatic limitation permission group list or that the permission groups are not to be included in the automatic limitation permission group list, the setting unit 120 limits the permission groups without changing the automatic limitation permission group list (750). A permission limitation based on permission groups may set as same or similar permission limitation conditions for some or all applications, and the permission limitation conditions may be included in the automatic limitation permission group list for more convenient permission limiting operation.

Here, operation of the monitoring unit 121 (see FIG. 1) will be described.

Referring to FIG. 1, the monitoring unit 121 may monitor an authority request received from an application and/or an outside source, and may provide, if the requested authority is set to be limited, a control right on the authority to the processor 122.

Referring again to FIG. 1, the monitoring unit 121 may check to determine four authority limitation operations and transfer the authority request to the processor 122, if an authority request matches one of the four limitation operations. The four authority limitation operations may include, without limitation, an application-based permission limitation setting operation, a permission group-based permission limitation setting operation, a permission limitation setting operation according to a selection of a trusted application, and an automatic permission limitation setting operation.

FIG. 8 is a flowchart illustrating an operation of a monitoring unit according to an exemplary embodiment of the invention.

Referring to FIG. 1 and FIG. 8, if an authority request from an application or an event from the outside is generated (810), the monitoring unit 121 determines whether there is at least one permission limitation set by the setting unit 121 (820). If it is determined in operation 820 that there is no permission limitation, the monitoring unit is inactivated (840).

If it is determined in operation 820 that there is at least one permission limitation, the monitoring unit 121 determines whether the corresponding terminal is in a locked state (830). If there is at least one permission limitation and the terminal is not in a locked state, the monitoring unit 121 is inactivated (840).

If the terminal is in a locked state, the monitoring unit 121 is activated (850). That is, if a user determines a presence of at least one authority limitation setting, the monitoring unit 121 may be activated to monitor operations performed by applications in the user's terminal even if the user may be unaware of what operations are being performed.

Further, the order of the operations illustrated herein are not intended to be limiting but illustrated for ease of description. For example, operation 830 and operation 850 may be performed before operation 810. That is, it may be also possible that after the terminal determines whether or not the terminal is in the locked state, the monitoring unit 121 to be activated if the terminal is in the locked state, and then, operation 810 and operation 820 may be performed.

The monitoring unit 121 determines whether a permission that has been set to be limited is requested (860). If no permission has been set to be limited is requested, the monitoring unit 121 transmits the authority request from the application to the service unit 123 of the framework 120 (870).

If a permission that has been set to be limited is requested, the monitoring unit 121 transmits the authority request from the application to the processor 122 (880).

Although not illustrated in FIG. 8, if the locked state of the terminal is released, whether by the user or by the terminal, and/or if no input signal is inputted to the terminal in the locked state in a reference time period, the mobile terminal may become idle or enter into a sleep mode. Further, in the same or similar scenario, the monitoring unit 121 may become inactivated.

Hereinafter, operation of the processor 122 in response to a permission limitation request transmitted by the monitoring unit 121 may be described.

Referring again to FIG. 1, the processor 122 may include four processor modules that may perform four or more operations. The operations may include, an application-based permission limitation setting operation, a permission group-based permission limitation setting operation, a permission limitation setting operation according to the selection of the trusted application, and the automatic permission limitation setting operation according to permission limitation settings by the setting unit 112. The processor 122 may notify permission limitation settings to the user. Further, one or more processor modules may store log information. The log information may be displayed in the form of a notification window (e.g., pop-up window, pop-under window, and the like) if the terminal is released from a locked state, and the user may store the log information in a data storage (e.g., data storage in a note pad) or delete the log information.

FIG. 9 is a flowchart illustrating an operation of a processor module A that processes an automatic permission limitation setting according to an exemplary embodiment of the invention.

Referring to FIG. 1, FIG. 2, FIG. 3, FIG. 4, FIG. 5, FIG. 6, FIG. 7, FIG. 8, and FIG. 9, the processor module A determines, if a permission limitation is requested from the monitoring unit 121, whether the automatic permission limitation is set (910). If the automatic permission limitation is set, the processor module A determines that some or all permissions of some or all applications are to be limited (920), and sends a permission limitation request to the service unit 123. The service unit 123 limits some or all permissions in response to the permission limitation request (930). The processor module A notifies a user of the permission limitation to the applications according to permission limitation results output setting information (940).

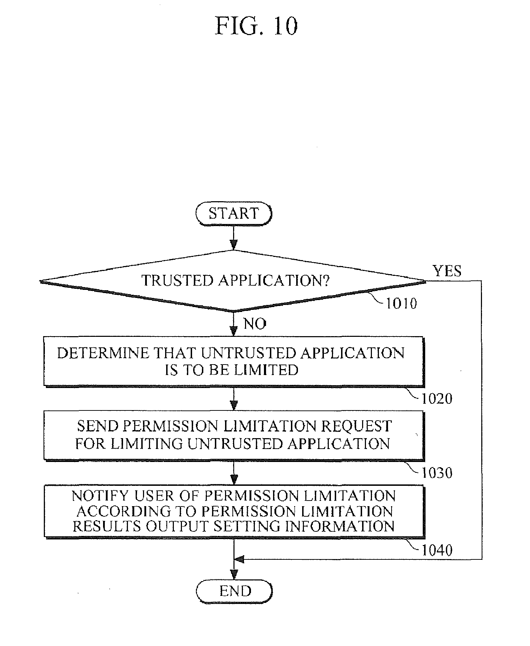

FIG. 10 is a flowchart illustrating an operation of a processor module B that processes a permission limitation setting according to a selection of a trusted application according to an exemplary embodiment of the invention.

The processor module B may limit some or all permissions requested by the remaining applications except for a permission limitation setting related to a trusted application, which may be selected by a user.

Referring to FIG. 10, the processor module B determines whether an application that has issued a permission request is a trusted application (1010). If the application is determined not to be a trusted application, that is if the application is determined to be an untrusted application, the processor module B sends a permission limitation request to limit the untrusted application to the service unit 123 (1020). The service unit 123 limits permissions of the untrusted application in response to the permission limitation request (1030). The processor module B notifies the user of the permission limitation request and/or its response to the request according to permission limitation results output setting information.

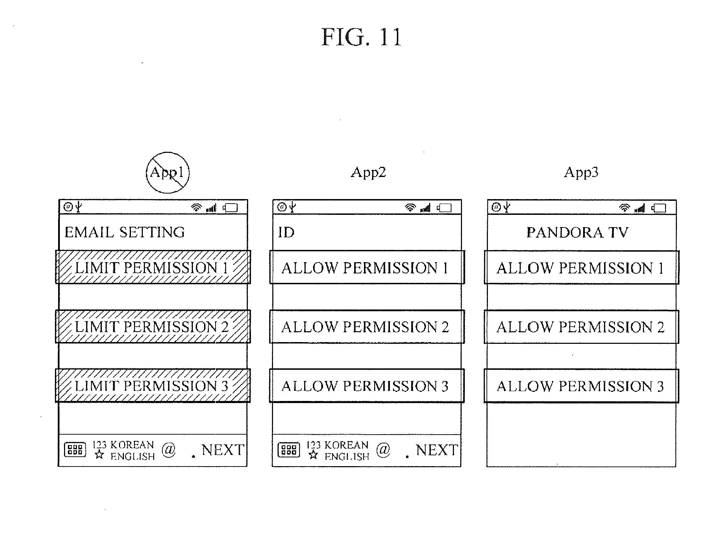

FIG. 11 is a screen shot of an operation of a processor module C that processes an application-based permission limitation setting according to an exemplary embodiment of the invention.

Referring to FIG. 1 and FIG. 11, if an event of an application or an application group in which a permission limitation has been set is generated, the processor module C may limit corresponding authority or permission of the application or application group. That is, if it is determined that an application-based permission limitation request has been issued by an application or an application group, the processor module C may limit the corresponding permission.

Referring to FIG. 11, a first application App1 whose authority has been limited by the setting unit 112 may be subject to a permission limitation and the processor module C may limit permissions of the first application App1 accordingly.

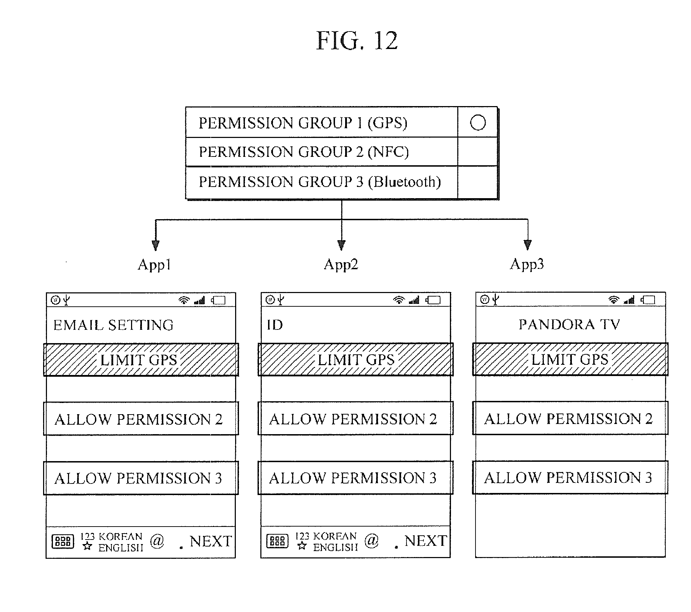

FIG. 12 is a screen shot of an operation of a processor module D that processes a permission group-based permission limitation setting according to an exemplary embodiment of the invention.

The processor module D may limit, if a limitation of permission or a permission group of one or more applications is generated, the corresponding permission or permission group. That is, if a permission group-based permission limitation request is set, the processor module D may limit a permission belonging to the limited permission group if the permission is requested by an application installed in the corresponding mobile terminal.

Referring to FIG. 12, if a first permission group (GPS) is subject to an authority limitation, some of all applications belonging to the GPS permission group may be limited.

Although not illustrated, a reporting unit may be further provided. The reporting unit may report the results of processing by the processor 122 according to the permission limitation results output setting as described above.

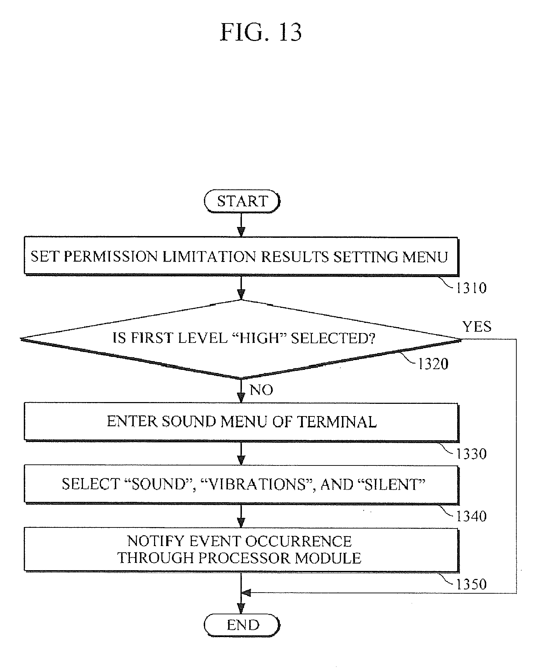

FIG. 13 is a flowchart illustrating an operation of a reporting unit according to an exemplary embodiment of the invention.

Referring to FIG. 13, the reporting unit sets a permission limitation results setting menu (1310). The reporting unit determines whether a first level "high" is selected (1320). If the first level "high" is selected, the reporting unit may block some or all permissions without providing notification.

If the first level "high" is not selected, the reporting unit enters a sound menu of the corresponding terminal (1330). The reporting unit selects "sound", "vibrations", and "silent" (1340). The reporting unit may notify an event occurrence to a user through a processor module.

If a second level "middle" or a third level "low" is selected, the reporting unit may notify an event occurrence to the user according to information set by the user or based on reference system conditions. The event may be recorded as log information, and if the user releases the selected level, he or she can check or view history information of the corresponding log in the form of a notification window (e.g., pop-up window, pop-under window, and the like). The history information may be stored in data storage (e.g., data storage in a note pad).

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile terminal and a method for preventing leakage of information and unauthorized use of resources is provided. The mobile terminal includes a monitoring unit to receive an application execution request and to generate an authority request for the application, a setting unit to determine whether the application execution request corresponds to a set permission limitation, and a processor to apply the permission limitation to the application according to the set permission limitation. The method includes receiving a request to execute an operation of the application, generating an authorization request for the application, determining whether the application corresponds to a set permission limitation stored in a data storage, and applying a permission limitation to the application according to the set permission limitation.

## Claims

1. A method for limiting permission of an application in a mobile terminal, comprising:
receiving a request to execute a first operation of the application;
generating a first authorization request for the application;
determining whether the application corresponds to a set permission limitation stored in a data storage; and
applying a permission limitation to the application according to the set permission limitation.

2. The method of claim 1, wherein the permission limitation is based on the application, if the permission limitation is set as an application-based limitation.

3. The method of claim 1 or 2, wherein the permission limitation is based on a group comprising the application, if the permission limitation is set as a group-based permission limitation setting operation.

4. The method of one of claims 1 to 3, further comprising displaying a list of trusted applications, if the permission limitation is set as a trusted application permission limitation,
wherein the list of trusted applications preferably is displayed in a notification window.

5. The method of one of claims 1 to 4, wherein the applied permission limitation is a reference permission limitation based on the application, if the permission limitation is set as an automatic permission limitation.

6. The method of one of claims 1 to 5, wherein the application generates a second authorization request for the application in response to execution of a second operation of the application.

7. The method of one of claims 1 to 6, further comprising:
determining a security state level set for the application;
controlling a level of notification provided according to the security state level; and
delivering a notification of a result of applying the permission limitation based on the determined security state level set;
and preferably further comprising:
recording a log of at least one of a permission limitation request for the application, a determination of the set permission limitation, an application of the permission limitation, and the result of application of the permission limitation.

8. The method of one of claims 1 to 7, further comprising:
determining whether the mobile terminal is in a locked state; and
activating a monitoring unit, if the mobile terminal is determined to be in the locked state.

9. A mobile terminal adapted to limit permission of an application in the mobile terminal, comprising:
a monitoring unit adapted to receive an application execution request and to generate an authority request for the application;
a setting unit adapted to determine whether the application execution request corresponds to a set permission limitation; and
a processor to apply the permission limitation to the application according to the set permission limitation.

10. The mobile terminal of claim 9,
wherein permission limitation is based on the application, if the permission limitation is set as an application-based limitation;
or/and
wherein the permission limitation is based on a group comprising the application, if the permission limitation is set as a group-based permission limitation;
or/and
wherein permission limitation is based on whether the application is determined to be a trusted application.

11. The mobile terminal of one of claims 9 or 10, wherein permission limitation is a reference permission limitation based on the application, if the permission limitation is automatically set.

12. The mobile terminal of one of claims 9 to 11, wherein the setting unit further is adapted to display at least one of a list of trusted applications, the permission limitation applied to the application, and a notification related to the application execution request.

13. The mobile terminal of one of claims 9 to 12, wherein the setting unit further is adapted to determine a security state level of the application to control a level of notification provided according to the security state level; and to deliver a notification of a result of applying the permission limitation based on the determined security state level set;
wherein the setting unit preferably is adapted further to record a log of at least one of permission limitation request, a determination of the set permission limitation, an application of the permission limitation, and the result of application of the permission limitation.

14. The mobile terminal of one of claims 9 to 13, wherein the setting unit further is adapted to determine whether the mobile terminal is in a locked state, and to activate a monitoring unit if the mobile terminal is determined to be in the locked state.

15. A method for limiting access of an application in a mobile terminal, preferably according to one of claims 1 to 8, comprising:
receiving a request to execute an operation of the application;
generating an authorization request for the application;
determining whether the application corresponds to a set permission limitation;
applying a permission limitation to the application according to the set permission limitation;
determining a security state level set for the application;
controlling a level of notification provided according to the security state level; and
delivering a notification of a result of applying the permission limitation based on the determined security state level set.
